(19) Europäisches Patentamt
European Patent Office
Office européen des brevets

(11) **EP 2 229 784 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **07856161.0**

(22) Anmeldetag: **27.12.2007**

(51) Int Cl.:
***H04N 13/111*** (2018.01)

(86) Internationale Anmeldenummer:
**PCT/DE2007/002326**

(87) Internationale Veröffentlichungsnummer:
**WO 2009/082990 (09.07.2009 Gazette 2009/28)**

(54) **VERFAHREN UND VORRICHTUNG ZUR ECHTZEIT-MULTIVIEW-ERZEUGUNG**

METHOD AND DEVICE FOR REAL-TIME MULTI-VIEW PRODUCTION

PROCÉDÉ ET DISPOSITIF DE PRODUCTION D'IMAGES MULTIVUE EN TEMPS RÉEL

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**22.09.2010 Patentblatt 2010/38**

(73) Patentinhaber: **psHolix AG**
**4051 Basel (CH)**

(72) Erfinder: **NASKE, Rolf-Dieter**
**21255 Kakenstorf (DE)**

(74) Vertreter: **Müller Schupfner & Partner**
**Patent- und Rechtsanwaltspartnerschaft mbB**
**Schellerdamm 19**
**21079 Hamburg (DE)**

(56) Entgegenhaltungen:
**US-A1- 2002 191 841**

• RUI NABESHIMA ET AL: "Frame Rate Stabilization by Variable Resolution Shape Reconstruction for On-Line Free-Viewpoint Video Generation" COMPUTER VISION - ACCV 2006 LECTURE NOTES IN COMPUTER SCIENCE;;LNCS, SPRINGER, BERLIN, DE, Bd. 3852, 1. Januar 2005 (2005-01-01), Seiten 81-90, XP019027518 ISBN: 978-3-540-31244-4
• XI OU ET AL: "Efficient free viewpoint image reconstruction from multi-focus imaging sequences based on dimension reduction" INTELLIGENT SIGNAL PROCESSING AND COMMUNICATION SYSTEMS, 2007. ISPACS 2007. INTERNATIONAL SYMPOSIUM ON, IEEE, PI, 1. November 2007 (2007-11-01), Seiten 152-155, XP031211490 ISBN: 978-1-4244-1446-8
• SCHMIDT J ET AL: "Dense disparity maps in real-time with an application to augmented reality", APPLICATIONS OF COMPUTER VISION, 2002. (WACV 2002). PROCEEDINGS. SIXTH IEEE WORKSHOP ON 3-4 DEC. 2002, PISCATAWAY, NJ, USA,IEEE, 3 December 2002 (2002-12-03), pages 225-230, XP010628753, ISBN: 978-0-7695-1858-9

**Beschreibung**

**Aufgabenstellung**

Autostereoskopische Displays, bei denen mehrere Perspektiven gleichzeitig dargestellt werden, und es so vielen Betrachtern an verschiedenen Betrachtungspositionen gleichzeitig ermöglicht wird, ohne optische Hilfsmittel ein dreidimensionales Raumbild zu betrachten, gewinnen seit einigen Jahren immer mehr an Bedeutung.

Die Anzahl der gleichzeitig dargestellten Perspektiven schwankt, im Allgemeinen zwischen 4 und 32. Sie kann in Zukunft jedoch auch höher sein.

Die Menge der Perspektiven, die gleichzeitig angezeigt werden und im Allgemeinen auch zum gleichen Zeitpunktt aufgenommen wurden, soll im Folgenden als Multiview-Bild bezeichnet werden.

Betrachtet man einmal den gesamten Produktionsprozess von der Aufnahme mit der Stereo-Kamera über die kodierte Übertragung bis zur Darstellung auf dem autostereoskopischen Display, so ergeben sich unterschiedliche Anforderungen und Randbedingungen:

- Bei der Aufnahme muss die Kamera leicht zu tragen und handhaben sein. Sie sollte also leicht sein und mit nur wenigen Objektiven (z.B. nur 2) ausgestattet sein.
- Bei der Übertragung sollten so wenig Perspektiven wie möglich gesendet werden, damit die Auflösung für jede Perspektive maximal sein kann.
- Bei der Darstellung sollten so viele Perspektiven wie möglich angezeigt werden, damit möglichst viele optimale Betrachtungspositionen entstehen.

Diese Anforderungen legen den Schluss nahe, dass es am sinnvollsten wäre, möglichst viele Perspektiven am Ort der Darstellung zu erzeugen. Zusätzlich muss darauf geachtet werden, dass die Kapazität unterschiedlicher Vorrichtungen trotzdem zu einer Verarbeitungszeit führt, die kürzer ist als die Zeit zwischen zwei Stereobildern. Dies soll daher das Ziel des eingereichten Patentes sein.

**Stand der Technik**

Für die Übertragung von Stereobildern wurde im Rahmen der MPEG-Organsation bereits 1996 ein so genanntes "Multiview-Profile" (MVP) verabschiedet, welches es erlaubt, mehr als eine Kameraposition konsistent zu kodieren und zu übertragen. In der Praxis wird dies meistens aus den oben genannten Gründen für 2 Kamera-Positionen verwendet werden.

Neben dem Multiview-Profil von MPEG, welches im Bereich der digitalen Übertragungen an Bedeutung gewinnen wird, sind aber auch solche, in allgemeine analoge, Formate relevant, die sich aus historischen Gründen ergeben haben. Hier sind z.B. das Field-Sequential-, Interlaced, Over/Under oder Side-by-Side aus dem Bereich der Video-Recorder zu nennen. In diesen Fällen gibt es keine Disparitätskarte, die als Informationsquelle genommen werden kann.

In CA 2 212 069 (Ref. 4) wird ein Verfahren vorgestellt, bei dem durch Least-Squares-Optimierung von Heferenzbröcken im Suchbereich eine optimale Disparität gefunden wird. Dieses Verfahren wird zur Kodierung von Stereobildfolgen verwendet. Es wird jedoch nur auf die Luminanzwerte des Bildes angewendet. Parameter einer affinen Transformation sollen zusätzlich mögliche Unterschiede in der Kalibrierung der Kameraköpfe kompensieren. Da das vorgestellte Verfahren insbesondere für eine optimale Kodierung und Dekodierung von Stereobildfolgen entwickelt wurde, gibt es einen engen Zusammenhang mit den MPEG-Kodierungsverfahren.

In CA 2 553 473 (Ref. 5) wird aus einer monoskopischen Bildfolge durch Analyse der Kanten eine Tiefenkarte erzeugt, durch welche zusammen mit dem Originalbild ein Stereobild synthetisiert wird. Da es jedoch keine Informationen über Verdeckungen und die zugehörige Bildinhalte gibt, ist dieses Verfahren für eine optisch korrekte Multiview-Erzeugung hier nicht akzeptabel

In US 2007/0104276 A1 (Ref. 6) wird ein Verfahren und System vorgestellt, welches auf dem Standard eines Multiview-Profils von MPEG beruht. Dabei wird so vorgegangen, dass zu einem Referenzbild (z.B. das linke Bild) Disparitätsvektoren zu allen anderen Teilbildern des Multiview-Bildes berechnet werden. Auf der Basis des Referenzbildes und der Disparitätsvektoren werden die Teilbilder rekonstruiert und die Differenz/Korrelation zwischen dem ursprünglichen Teilbild und dem rekonstruierten Teilbild in einer beliebigen Norm bestimmt. Der Rekonstruktionsfehler wird zur Definition einer Schätzstruktur verwendet.

In WO 2007/035054 A1 (Ref. 7) wird ein Kodierungsverfahren vorgestellt, welches dazu dient ein Multiview-Bild von mehreren Kameras möglichst effektiv zu kodieren und dekodieren. Hier wird die Disparität nicht für alle Blöcken berechnet. Die Disparität von nicht berechneten Blöcken wird mittels Interpolation auf der Basis einer zugehörige Referenzliste erstellt. Dadurch ist es nicht erforderlich die Disparität für alle Blöcke zu berechnen. Lineare bzw. kubische zwei-dimensionale Interpolationsverfahren werden angewendet, um die Disparität für nicht berechnete Blöcke zu schätzen.

In US 2005/0185048 A1 (Ref. 8) wird eine Zwischenperspektive dadurch erzeugt, dass in der Zwischenperspektive ein Block definiert wird und dieser Block im rechten und linken Bild gleichzeitig um eine Disparität verschoben wird bis der Absolutbetrag Summe der Pixelwerte minimal ist. Der Bildpunkt der Zwischenperspektive wird als Mittelwert (verallgemeinert "Überblendung") der gefundenen minimalen Pixelwerte von linkem und rechtem Bild festgelegt.

RUI NABESHIMA ET AL: "Frame Rate Stabilization by Variable Resolution Shape Reconstruction for On-Une Free-Viewpoint Video Generation", COMPUTER VISION - ACCV 2006 LECTURE NOTES IN COMPUTER SCIENCE;LNCS, SPRINGER, BERLIN, Bd. 3852, 1. Januar 2005 (2005-01-01), Seiten 81-90 offenbart ein Verfahren zur stabilen Übertragung von durch ein 3D-Modell dargestellten Gegenständen, wobei jeder Empfänger ein Stereobild von einem individuell bestimmbaren Standpunkt erzeugen kann. Dabei wird die Auflösung des 3D-Modells variiert, um eine kontinuierliche Übertragung zu gewährleisten. Obige Veröffentlichung betrifft nicht ein Verfahren zur Erzeugung und Wiedergabe von Stereobildern in Pixelform.

In J. Schmidt, H.Niemann et al (Ref. 9) werden für ein empfangenes Stereobild die beiden linken und rechten Disparitätskarten berechnet. Dies geschieht unter Verwendung der Betragsnorm durch Berechnung der Disparitäten zwischen $d_{min}$ und $d_{max}$ und Speicherung der Werte In einem Akkumulatorfeld für jeden Pixel jeder Zeile. Da die Bilder als rektifiziert vorausgesetzt werden, ist dies zulässig und verringert die Verarbeitungszeit. Großer Aufwand wird getrieben um "Löcher" zu füllen und Zuordnungssicherheit und Konsistenz herzustellen. Die angegebenen experimentellen Ergebnisse zeigen jedoch, dass für ein Bild der Größe 720x576 im besten Fall eine Verarbeitungszeit für die Disparitätskarten von 155ms erforderlich wird. Bei einer empfangenen Bildgröße von z.B. 1920x1080 und 50 Bildern pro Sekunden, wie sie im heutigen HDTV-Fernsehen verwendet wird, stehen aber nur maximal 15ms für die Berechnung der Disparitätskarte zur Verfügung. Das vorgeschlagene Verfahren müsste also um mehr als den Faktor 10 beschleunigt werden.

In den hier vorgestellten Verfahren und Vorrichtungen sollen aus einem Stereobild mit mindestens 2 Perspektiven zusätzliche (im Allgemeinen 8 und mehr), virtuelle Perspektiven erzeugt werden, unter der Bedingung, dass die Zeit für den gesamten Erzeugungsprozess kleiner ist als die vorgegebene Bildrate und dass gleichzeitig die Multiview-Bildqualität maximal ist.

Die Erfindung ist gekennzeichnet durch den Gegenstand des Anspruches 1 und 3. Bevorzugte Ausführungsformen sind Gegenstand des Unteranspruchs 2.

Es wird nicht vorausgesetzt, dass eine Disparitätskarte bereits existiert. Sie kann jedoch, falls vorhanden, zu Hilfe genommen werden, um die Verarbeitungsgeschwindigkeit zu erhöhen.

Im allgemeinen Fall werden einerseits die Bildbereiche identifiziert, die sich zwischen zwei Stereobildern der Bildfolge nicht verändert haben. In diesen Bereichen kann sich unter der Voraussetzung, dass sich die geometrischen Parameter der Objektive der Stereo-Kamera nicht verändert haben, auch die zugehörige Disparitätskarte nicht verändert haben.

Andererseits werden durch permanente Zeitmessung während der Verarbeitung die Verarbeitungsparameter permanent angepasst, sodass die Qualität immer maximal ist.

Es ergibt sich dadurch ein adaptives Verfahren, das auch auf Belastungsschwankungen der zugrunde gelegten Hardware-Vorrichtung reagieren kann.

## Beschreibung der Zeichnungen

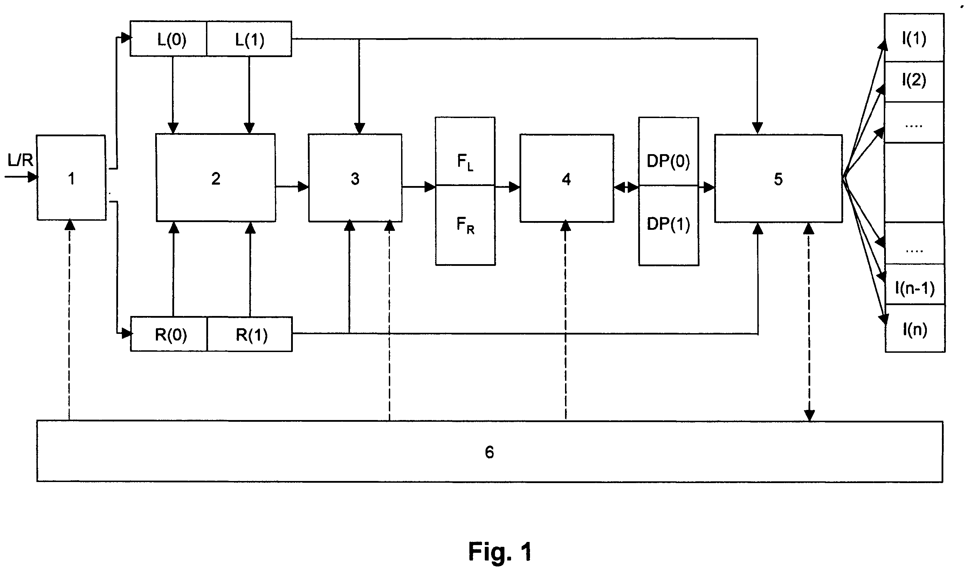

Fig. 1 ist ein Blockdiagramm der verschiedenen Verfahrensschritte und ihr Zusammenhang.

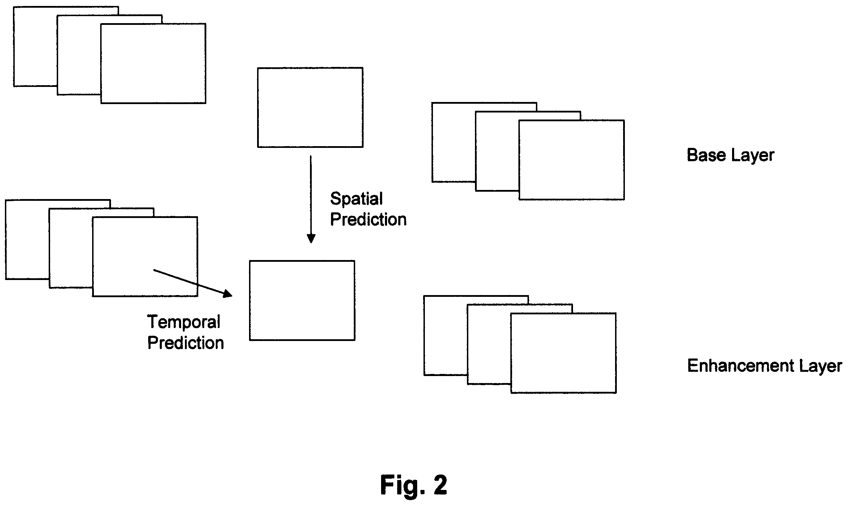

Fig. 2 zeigt das Grundprinzip der Multiview-Kodierung im Rahmen des MPEG-Standards

Fig. 3 zeigt in einer Zeile der Disparitätskarte wie den zuordenbaren Bildpunkten des linken Stereobildes die rechten Bildpunkte zugeordnet werden. Rechtsverdeckungen sind durch eine -1 im zugehörigen Feld des linken Teilbildes angezeigt. Linksverdeckungen ergeben sich durch Sprünge in der Zuordnung zu den rechten Bildpunkten.

Fig. 4 zeigt exemplarisch wie eine Hardwarestruktur mit mehreren Verarbeitungseinheiten aussehen kann.

Fig. 5 zeigt ein Flussdiagramm zur Echtzeit-Multiview-Etzeugung.

## Verfahrensbeschreibung im Detail

Jede Echtzeit-Multiview-Erzeugung beginnt damit, dass ein Stereobild in einem bestimmten Stereoformat empfangen wird. Das Stereobild besteht aus zwei Teilbildern derselben Szene, die zur selben Zeit aus unterschiedlichen Perspektiven aufgenommen wurden. Es kann jede beliebige Größe besitzen. Heutige Bildgrößen gehen bis zu zweimal HDTV (1920x1080).

Das empfangene Stereobild wird in ein linkes Teilbild L und ein rechtes Teilbild R aufgeteilt und auf eine bestimmte Größe G(t) skaliert. Die Größe G(t) ist die Verarbeitungsgröße. In Abhängigkeit von der Leistungsfähigkeit und Auslastung der verwendeten Hardwarestruktur kann G(t) zeitlich variieren. Am Ende einer jeden Echtzeit-Multiview-Erzeugung wird die Verarbeitungszeit gemessen und G(t) entweder vergrößert oder verkleinert.

Ein Anfangswert für G(t) wird bei Verfahrensstart gesetzt. Nach ca. 2 bis 3 Echtzeit-Multiview-Erzeugungen hat sich G(t) automatisch/adaptive auf einen optimalen Wert eingestellt. Die Skalierung wird vom so genannten Kompressor (1) durchgeführt.

Nach der Kompression auf die richtige Verarbeitungsgröße werden die Bereiche gesucht, die sich zwischen dem aktuellen Bild L(1)bzw. R(1) und dem vorherigen Bild L(0) bzw. R(0) nicht verändert haben. Hierzu wird das Bild in Blöcke gleicher Größe (z.B. 16x16) aufgeteilt und jeder Block mit dem gleichen Block im vorherigen Bild verglichen. Ist der Unterschied unterhalb einer Schranke $\varepsilon$, so werden alle Bildpunkte des Blockes als unverändert markiert. Die Ähnlichkeit kann sich auf Grauwerte, RGB-Werte oder sonstige Werte beziehen. Zur Berechnung der Ähnlichkeit können sowohl Abstandsmaße als auch Korrelationsmaße verwendet werden. Diese Erkennung der unveränderten. Bereiche kann sowohl im linken als auch im rechten Bild durchgeführt werden. Zur Vereinfachung der folgenden Darstellung soll fortan ohne Einschränkung der Allgemeingültigkeit davon ausgegangen werden, dass die Konstanz-Detektion im linken Bild durchgeführt wird.

Die Identifikation der konstanten Blöcke wird vom so genannten Konstanz-Detektor (2) durchgeführt. Im linken Teilbild z.B. können Bildpunkte markiert werden, für die es eine Disparität gibt, d.h. sie sind auch im rechten Bild vorhanden, oder solche, die wegen einer Rechtsverdeckung im rechten Teilbild nicht vorhanden sind. Wird die Konstanz-Detektion im rechten Teilbild durchgeführt, ergeben sich Bildpunkt mit Disparität oder Linksverdeckungen.

Das Ergebnis des Konstanz-Detektors wird dem Merkmals-Extraktor (3) zugeführt. Für Bildpunkte, die nicht als konstant markiert sind, werden nun die erforderlichen Merkmale berechnet. Für Bildpunkte, die als konstant markiert wurden, sind die Merkmale bereits bei der vorherigen Echtzeit-Multiview-Erzeugung berechnet.

Diese Merkmal-Extraktion wird für beide Bilder L(1) und R(1) durchgeführt: Große konstante Bereiche reduzieren die Verarbeitungszeit signifikant.

Das Ergebnis der Merkmalextraktion wird im Speicher $F_L$ und $F_R$ für das linke und rechte Teilbild gespeichert. Da der Merkmalspeicher $F_L$ und $F_R$ ebenfalls die Größe G(t) besitzt, werden die neu berechneten Merkmale für die Bildpunkte einfach an die gleiche Position geschrieben. Konstante Bildpunkte behalten automatisch ihre Merkmalsvektoren, sofern die Größe G(t)im vorherigen Schritt nicht verändert wurde.

Als Merkmale können z.B. die RGB-Werte, Kantenwerte oder Homogenitätswerte verwendet werden. Alle bekannten Merkmalsextraktionsverfahren, welche einem Bildpunkt ein Merkmal zuordnen, können verwendet werden.

Die Speicher $F_L$ und $F_R$ stehen dem Bild-Analysator (4) zur Verfügung. Aufgabe des Bild-Analysators ist es, die Disparitätskarte zu erstellen. Für diese Berechnung werden z.B. Verfahren der dynamischen Programmierung auf die einzelnen Zeilen des linken und rechten Teilbildes zur Feststellung der optimalen Zuordnung angewendet

Eine Anwendung auf die Zeilen ist jedoch nur zulässig, wenn sich das Stereobild in Stereonormalform befindet. Ist dies nicht der Fall, so kann dies entweder durch lineare Vor- und Rücktransformation erreicht werden, oder durch die Anwendung modifizierter Disparitätsschätzverfahren, die z.B. sich an den Epipolaren orientieren. Zur Vereinfachung der Darstellung sei im Folgenden die Stereonormalform vorausgesetzt.

Da dieser Schritt einer der zeitaufwendigsten Teilschritte ist, muss hier besonders auf eine Reduzierung der Verarbeitungszeit geachtet werden. Auch in diesem Schritt steht daher das Ergebnis der Konstanz-Detektion zur Verfügung. Der Bild-Analysator hat für jeden Bildpunkt die Information

$$K(i,j) := \begin{cases} 1, \text{ wenn Bildpunkt } (i,j) \text{ sich geändert hat,} \\ \\ 0, \text{ sonst.} \end{cases}$$

Für alle Bildpunkte (i, j), für die K(i, j) = 0 ist, kann die Disparität DP(0,i,j) nach DP(1,i,,j) übernommen werden. DP(1,i,j) ist die Matrix der Disparitäten zum aktuellen Zeitpunkt.

Im Allgemeinen wird für die Ähnlichkeitsberechnung eine Umgebung um die Bildpunkte (i, j) mit dem Merkmalsvektor $F_L(i,j)$ genommen. Die Umgebung kann dabei ein Rechteck sein oder durch geometrische Eigenschaften wie z.B. Kanten eingeschränkt sein. Als Ähnlichkeitsmaß bietet sich jede Norm wie z.B. Euklid, Absolutbetrag oder Korrelation an. Merkmale können in der Norm zusätzlich noch gewichtet werden, wobei die Gewichte beim Verfahrensstart

eingelesen wurden.

Die konstanten Disparitäten einer Zeile können dabei zu einer Optimierungsaufgabe mit Restriktionen führen, sodass die Disparität nur für diejenigen Bildpunkte (i, j) berechnet wird, für die K(i, ,j) = 1 ist, oder z.B. zu einer segmentierten dynamischen Optimierungsaufgabe führen, wobei die Optimierung immer nur in dem Segment durchgeführt wird, für das alle K(i, j) = 1 sind.

Der Wert DP(1, i, $j_u$) mit dem kleinsten j eines Segmentes, sodass K(i, $j_u$) = 0 ist, wird als linker Anfangspunkt des Segmentes genommen. Der Wert DP(1, i, $j_o$) mit dem größten j des Segmentes, sodass K(i, $j_o$) = 0 ist, wird als rechter Endwert des Segmentes genommen.

Eine dynamische Optimierung wird also nur im Segment von $j_u$ bis $j_o$ vorgenommen. Dabei können sich innerhalb einer Zeile natürlich mehrere Segmente ergeben. Die Matrix DP(1, i, j) ist dann wie folgt definiert:

$$DP(1,i,j) := \begin{cases} j^*, \text{ wenn Bildpunkt (i, j) aus dem linken Teilbild dem} \\ \qquad \text{Bildpunkt (i, j) zugeordnet wird,} \\ \\ -1, \text{ wenn Bildpunkt (i, j) eine Rechtsverdeckung ist.} \end{cases}$$

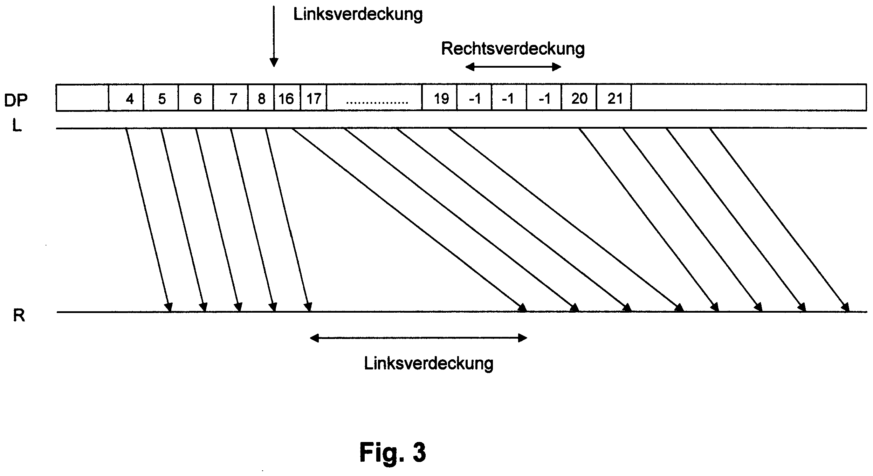

Linksverdeckungen sind in DP(1) daran zu erkennen, dass es eine Lücke zwischen DP(1, i, j) und DP(1, i, j+1) gibt. Eine Zeile von DP(1) ist in Fig. 3 dargestellt

Durch die Bild-Analyse wird die Matrix DP(1) erstellt.

Der Bild-Synthesizor (5) verwendet nun die Disparitätskarte DP(1) sowie die Teilbilder L(1) und R(1) und kopiert sie nach I(1) und I(n). Nur die virtuellen Perspektiven I(2) bis I(n-1) werden erzeugt.

Der Bild-Synthesizor realisiert praktisch eine virtuelle Kamerafahrt von L(1) nach R(1) mit n-2 Haltepunkten, wenn das Multiview-Bild n Perspektiven enthalten soll. n > 2 kann von Betrachter jederzeit geändert werden.

Für alle (i,j) aus dem linken Teilbild wird wie folgt vorgegangen:
Ist DP(1, i, j) = $j^*$, so wird $\Delta j^* := (j^* - j)/(n-1)$ berechnet.

Die virtuelle Kamerafahrt bedeutet für einen Bildpunkt L(1, i, j), dass

$$I(k, i, j + \Delta j^*(k-1)) := L(1, i, j), \ k = 1,...n$$

gesetzt wird.

Der Bereich einer Rechtsverdeckung, in dem DP(1, i, j) = -1 gilt wird auf dieser Kamerafahrt langsam ausgeblendet bis er in I(n) nicht mehr vorhanden ist,

Im Gegenzug wird eine Linksverdeckung, die dadurch gekennzeichnet ist, dass |DP(1, i, j) - DP(1, i, j+1)| > 1 gilt, langsam eingeblendet.

Gibt es für einen Bildpunkt L(1, i, j) eine Zuordnung $j^*$, so ist damit noch nicht sicher gestellt, dass L(1, i, j) = R(1, i, $j^*$) gilt. Dies kann z.B. durch unterschiedliches Rauschen oder Kamerakalibrierung verursacht sein. In diesem Fall kann auf der virtuellen Kamerafahrt zusätzlich eine Überblendung von L(1, i, j) nach R(1, i, $j^*$) durchgeführt werden, sodass I(n, i, f) = R(1, i, f) sichergestellt ist.

Kommt es durch Rundungsfehler bei der Berechnung j + $\Delta j^*$(k-1) dazu, dass in einer Multiview-Perspektive einige Bildpunkte nicht gesetzt wurden, so werden diese Fehlstellen durch geometrische Interpolation der gesetzten Randpunkte eingefügt.

Nach Beendigung der Bild-Synthese steht das Multiview-Bild mit n Perspektiven zur Darstellung auf dem Display zur Verfügung.

Die Steuereinheit (6) misst die Zeit $\Delta t$, die seit Eingang des Stereobildes vergangen ist. Für jedes Video-Format ist die Bildfrequenz (PAL = 50Hz, NTSC = 60Hz, HDTV= 100Hz) bekannt.

Ist die gesamte Berechnungszeit $\Delta t$ größer als die Zeit zwischen zwei Stereobildern, so modifiziert die Steuereinheit die Verarbeitungsparameter. Hierzu hat die Steuereinheit zwei Möglichkeiten:

1. Es werden einige Merkmale aus dem Merkmalsvektoren $F_L$ und $F_R$ nicht berechnet, z.B. ein Homogenitätsmaß.

2. Es wird die Verarbeitungsgröße G(t) verkleinert. Dadurch reduziert sich die Auflösung.

Ist andererseits die Berechnungszeit $\Delta t$ signifikant kleiner als die Zeit zwischen dem Empfang zweier Stereobilder, so kann die Steuereinheit die Auflösung vergrößern oder zusätzliche Merkmale zur Qualitätsverbesserung hinzufügen. Nach der Änderung der Steuerparameter wird für die nächsten 3-4 Zeitmessungen eine Änderung ausgesetzt, damit die neuen Steuerparameter sich auf die Verfahrenschritte auswirken können.

Insgesamt passt sich das Gesamtsystem dynamisch und adaptiv immer der Hardware-Auslastung an.

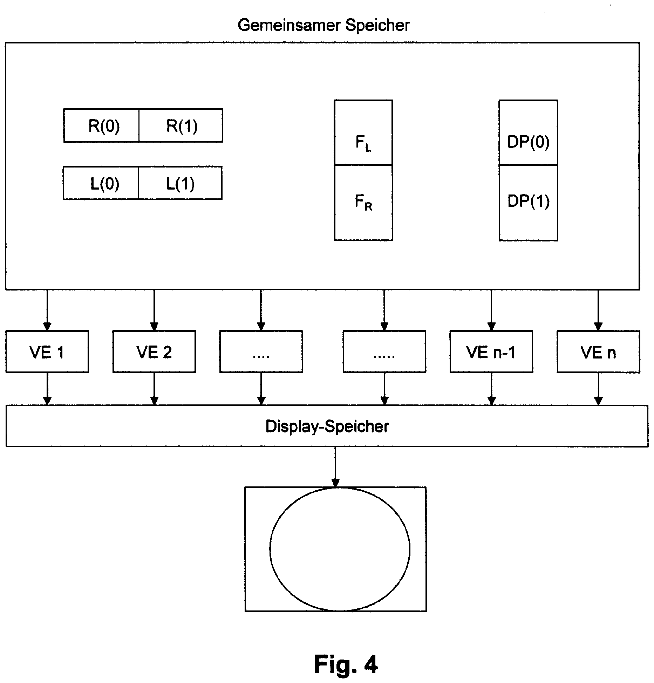

Alle Teilschritte sind so konzipiert, dass sie durch mehrere parallel vorhandene Verarbeitungseinheiten (Multi-Core) durchgeführt werden können. Dies ist in Fig. 4 dargestellt.

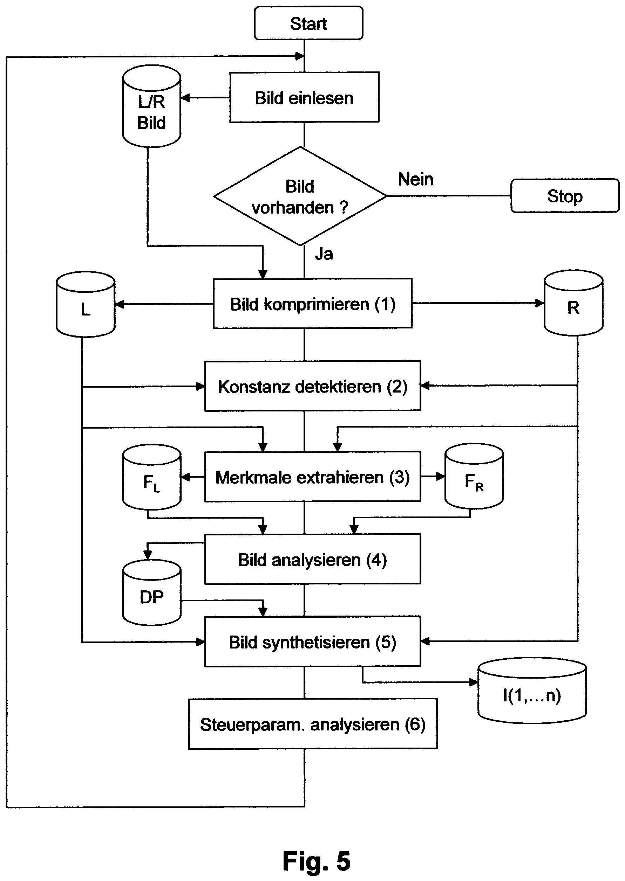

Alle Verarbeitungsschritte sind in Fig. 5 als Flussdiagramm dargestellt.

In einer weiteren Ausführung wird der Konstanz-Detektor, der die konstanten Blöcke lokalisieren soll, mit einem der MPEG-Kodierungsverfahren kombiniert.

Bei diversen MPEG-Kodierungsverfahren werden auch Blöcke (im Allgemeinen der Größe 16x16) identifiziert, die sich nicht verändert haben. Diese Blöcke werden nicht übertragen. Ein integriertes Verfahren könnte also diese Information, beziehungsweise die Zusatz-Information aus dem Enhancement-Layer aufnehmen und für die nachfolgenden Verarbeitungsschritte aufbereiten.

**Referenzen:**

1. US 2006/01616138 A1 und Nachmeldungen, "Method and System for Synthesizing Multiview Videos", 30.11.2005, Jun Xin Quincy

2. EP 1 175 104 B1 und Nachmeldungen, "Stereoscopic Image Disparity Measuring System", 15.6.2001, Jeong, Hong et al.

3. US 6,847,728 B2, "Dynamic Depth Recovery from Multiple Synchronized Video Streams", 9.12.2002, Hai Tao et al

4. CA 2 212 069, "Optimal Disparity Estimation for Stereoscopic Video Coding", 6.8.1996, Chen, Xuemin et al

5. US 2007/0024614 A1, "Generating A Depth Map from a Two-dimensional Source Image for Stereoscopic and Multiview Imaging", 25.7.2006, Wa James Tam et al.

6. US 2007/0104276 A1, "Method and Apparatus for Encoding Multiview Video", 6.11.2006, Ha, Tae-Hyeun

7. WO 2007/035054 A1, "Method of Estimating Disparity Vector, and Method for Encoding and Decoding Multi-View Moving Picture using the Disparity Vector Estimation Method", 22.9.2005, Ha, Tae-Hyeun

8. US 2005/0185048 A1, "3-D Display System, Apparatus, and Method for Reconstructing Intermediate-View Video", 27.1.2005, Ha, Tae-Hyeun

9. J. Schmidt, H. Niemann et al, "Dense Disparity Maps in Real-Time with an Application to Augmented Reality", Proc. Of the Sixth IEEE Workshop on Applications for Computer Vision (WACS'02), ISBN 0-7695-1858-3/02

**Patentansprüche**

1.  Verfahren zur Echtzeit-Erzeugung von m > 0 synthetischen Bildern als zusätzliche virtuelle Perspektiven aus einem empfangenen Stereobild einer Stereobildfolge mit jeweils zwei oder mehr Teilbildern derselben Szene, die zur selben Zeit aus unterschiedlichen Perspektiven aufgenommen wurden,
    wobei das empfangene Stereobild auf die Verarbeitungsgröße G(t), welche die Auflösung des Stereobildes beschreibt, zum Erhalt eines skalierten Stereobildes skaliert wird, **dadurch gekennzeichnet, dass**
    in einem Konstanz-Detektor (2) Bildbereiche in einem der zwei oder mehr Teilbilder des skalierten Stereobildes identifiziert werden, welche sich vom jeweils gleichen Bildbereich des gleichen Teilbilds des vorherigen skalierten Stereobildes um weniger als einen festzulegenden Wert $\varepsilon$ unterscheiden, wobei für jeden Bildpunkt (i,j) die Information K(i,j) = 1 gespeichert wird, wenn der Bildpunkt sich geändert hat, sonst wird die Information K(i,j) = 0 gespeichert,
    wobei für die Bildpunkte mit K(i,j) = 0 die mit dem vorherigen Teilbild berechneten Werte der Disparitätskarte der zugehörigen Bildpunkte übernommen werden, wobei nur für die Bildpunkte (i,j), für die die Information K(i,j) = 1 gespeichert wurde, die Disparität berechnet wird und

aus den Teilbildern und den übernommenen und den berechneten Disparitäten m > 0 synthetische Bilder als zusätzliche virtuelle Perspektiven erzeugt werden und eine Steuereinheit (6) am Ende einer jeden Erzeugung der m synthetischen Bilder die Verarbeitungszeit misst und mit vorgegebenen Zielwerten vergleicht, wobei ein oder mehrere Steuerparameter umfassend zumindest die Verarbeitungsgröße G(t) und/oder die Anzahl der zur Disparitätsschätzung verwendeten Merkmale der Bildpunkte, welche durch die Merkmalsvektoren $F_L$ und $F_R$ beschrieben sind, durch automatische Schätzverfahren so verändert werden, dass die Verarbeitungsgröße G(t) und die Anzahl von Merkmalen der Bildpunkte die Erzeugung der m synthetischen Bilder in der als Zielwert vorgegebenen Verarbeitungszeit für das nächste Stereobild der Stereobildfolge ermöglichen.

2. Verfahren nach Anspruch 1, wobei der Konstanz-Detektor (2), welcher konstante Blöcke im empfangenen Stereobild lokalisiert, mit einem MPEG-Kodierungsverfahren kombiniert ist, wobei die konstanten Blöcke die Bildbereiche sind, welche sich vom gleichen Teilbild des vorherigen Stereobildes um weniger als einen festzulegenden Wert ε unterscheiden.

3. Vorrichtung zur Durchführung des Verfahrens nach einem der vorhergehenden Ansprüche mit einem Kompressor (1) zur Anpassung der empfangenen Bildgröße, welche die Auflösung des empfangenen Stereobildes beschreibt, an die Verarbeitungsgröße G(t), dem Konstanz-Detektor (2) zur Identifizierung der konstanten Bildbereiche, einem Merkmal-Extraktor (3) zur Berechnung der Merkmale der Bildpunkte, einem Bild-Analysator (4) zur Berechnung der Disparitäten, einem Bild-Synthesizer (5) zur Erzeugung von m synthetischen Bildern, sowie der Steuereinheit (6), welche die Steuerparameter so einstellt, dass die Berechnung der m synthetischen Bilder abgeschlossen ist, bevor ein neues Stereobild empfangen wurde.

**Claims**

1. A method for generating m > 0 synthetic images in real time as additional virtual perspectives from a received stereo image of a stereo image sequence in each case comprising two or more partial images of the same scene, which partial images were captured at the same time from different perspectives, the received stereo image being scaled to the processing size G(t), which describes the resolution of the stereo image, so as to obtain a scaled stereo image, **characterized in that** image regions in one of the two or more partial images of the scaled stereo image are identified in a constancy detector (2), each of which image regions differs from the same image region of the same partial image from the previous scaled stereo image by less than a value ε to be determined, the information K(i,j) = 1 being saved for each pixel (i,j) if the pixel has changed, otherwise the information K(i,j) = 0 is saved, the values of the disparity map of the relevant pixels calculated using the previous partial image being adopted for the pixels with K(i,j) = 0, the disparity only being calculated for the pixels (i,j) for which the information K(i,j) = 1 was saved, and m > 0 synthetic images being generated from the partial images and the adopted and calculated disparities as additional virtual perspectives and a control unit (6) measuring the processing time at the end of each m synthetic image generation process and comparing said time with prespecified target values, one or more control parameters comprising at least the processing size G(t) and/or the number of pixel features used for disparity estimation and described by the feature vectors $F_L$ and $F_R$ being altered by means of automatic estimation procedures such that the processing size G(t) and the number of pixel features enable generation of the m synthetic images within the processing time specified as the target value for the next stereo image of the stereo image sequence.

2. The method according to claim 1, wherein the constancy detector (2), which locates constant blocks in the received stereo image, is combined with an MPEG coding procedure, wherein the constant blocks are the image regions which differ from the same partial image of the previous stereo image by less than a value ε to be determined.

3. A device for carrying out the method according to any of the preceding claims, comprising a compressor (1) for adapting the received image size describing the resolution of the received stereo image to the processing size G(t), the constancy detector (2) for identifying the constant image regions, a feature extractor (3) for calculating the pixel features, an image analyzer (4) for calculating the disparities, an image synthesizer (5) for generating m synthetic images, and the control unit (6), which sets the control parameters such that the calculation of the m synthetic images is completed before a new stereo image has been received.

**Revendications**

1. Procédé de génération en temps réel de m > 0 images de synthèse en tant que perspectives virtuelles supplémentaires à partir d'une image stéréo reçue d'une séquence d'images stéréo comportant respectivement au moins deux sous-images de la même scène, qui ont été enregistrées en même temps à partir de perspectives différentes, dans lequel l'image stéréo reçue est mise à l'échelle pour l'obtention d'une image stéréo mise à l'échelle à la taille de traitement G(t), laquelle définit la résolution de l'image stéréo, **caractérisé par le fait que** dans un détecteur de constance (2), des zones d'image sont identifiées dans l'une des au moins deux sous-images de l'image stéréo mise à l'échelle, lesquelles se différencient de la même zone d'image respective de la même sous-image de l'image stéréo mise à l'échelle précédente de moins d'une valeur ε à déterminer, où, pour chaque pixel (i, j), l'information K(i, j) = 1 est mémorisée, lorsque le pixel s'est modifié, sinon l'information E(i, j) = 0 est mémorisée, dans lequel, pour les pixels avec K(i, j) = 0, les valeurs calculées avec la sous-image précédente de la carte de disparités des pixels associés, sont adoptées, dans lequel uniquement pour les pixels (i, j) pour lesquels l'information K(i, j) = 1a été mémorisée, la disparité est calculée et à partir des sous-images et des disparités adoptées et des disparités calculées, m > 0 images de synthèse sont générées en tant que perspectives virtuelles supplémentaires et une unité de commande (6) à la fin d'une génération respective des m images de synthèse mesure le temps de traitement et compare à des valeurs cibles prédéterminées, où un ou plusieurs paramètres de commande comportant au moins la taille de traitement G(t) et/ou le nombre des caractéristiques des pixels utilisées pour l'évaluation des disparités, qui sont définis par les vecteurs caractéristiques $F_L$ et $F_R$, sont modifiés par des procédés d'évaluation automatiques de telle sorte que la taille de traitement G(t) et le nombre de caractéristiques des pixels permettent la génération des m images de synthèse dans le temps de traitement prédéfini en tant que valeur cible pour l'image stéréo suivante de la séquence d'images stéréo.

2. Procédé selon la revendication 1, dans lequel le détecteur de constance (2), lequel localise des blocs constants dans l'image stéréo reçue, est combiné avec un procédé de codage MPEG, les blocs constants étant les zones d'image, lesquelles se différencient de la même sous-image de l'image stéréo précédente de moins d'une valeur ε à déterminer.

3. Dispositif pour l'exécution du procédé selon l'une des revendications précédentes, comportant un compresseur (1) pour l'ajustement de la taille d'image reçue, laquelle définit la résolution de l'image stéréo reçue, à la taille de traitement G(t), le détecteur de constance (2) pour l'identification des zones d'image constantes, un extracteur de caractéristique (3) pour le calcul des caractéristiques des pixels, un analyseur d'images (4) pour le calcul des disparités, un synthétiseur d'images (5) pour la génération de m images de synthèse, ainsi que l'unité de commande (6), laquelle ajuste le paramètre de commande de telle sorte que le calcul des m images de synthèse est terminé avant qu'une nouvelle image stéréo n'ait été reçue.

I(1) I(2) ... ... I(n-1) I(n)

5

DP(0) DP(1)

4

$F_L$ $F_R$

3

L(1) L(0)

2

R(1) R(0)

1

L/R

6

**Fig. 1**

Fig. 2

Fig. 3

Gemeinsamer Speicher

| R(0) | R(1) |
| L(0) | L(1) |

| $F_L$ |
| $F_R$ |

| DP(0) |
| DP(1) |

VE 1 · VE 2 · ... · ... · VE n-1 · VE n

Display-Speicher

**Fig. 4**

Start

L/R Bild ← Bild einlesen

Bild vorhanden ? — Nein → Stop

Ja

L ← Bild komprimieren (1) → R

Konstanz detektieren (2)

$F_L$ ← Merkmale extrahieren (3) → $F_R$

Bild analysieren (4)

DP

Bild synthetisieren (5)

I(1,...n)

Steuerparam. analysieren (6)

# Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 2212069
- CA 2553473
- US 20070104276 A1
- WO 2007035054 A1
- US 20050185048 A1

- US 200601616138 A1
- EP 1175104 B1
- US 6847728 B2
- US 20070024614 A1

**In der Beschreibung aufgeführte Nicht-Patentliteratur**

- Frame Rate Stabilization by Variable Resolution Shape Reconstruction for On-Une Free-Viewpoint Video Generation. **RUI NABESHIMA et al.** COMPUTER VISION - ACCV 2006 LECTURE NOTES IN COMPUTER SCIENCE;LNCS. SPRINGER, 01. Januar 2005, vol. 3852, 81-90

- **J. SCHMIDT ; H. NIEMANN et al.** Dense Disparity Maps in Real-Time with an Application to Augmented Reality. *Proc. Of the Sixth IEEE Workshop on Applications for Computer Vision (WACS'02),* ISBN 0-7695-1858-3/02